# EUROPEAN PATENT APPLICATION

(11) **EP 4 049 868 A1**
(43) Date of publication of application: **31.08.2022**
(21) Application number: 20878898.4
(22) Date of filing: 22.10.2020
(51) Int. Cl.: B60H 1/00

(54) **AIR CONDITIONING DEVICE FOR VEHICLE**

(30) Priority: 25.10.2019 JP 2019193964
(71) Applicant: Valeo Japan Co., Ltd., Kumagaya-Shi SAITAMA 360-0193 (JP)
(72) Inventor: SAHU, Ashish, Kumagaya-shi Saitama 360-0193 (JP); ARAKI, Daisuke, Kumagaya-shi Saitama 360-0193 (JP)
(74) Representative: Valeo Systèmes Thermiques
(86) International application number: PCT/JP2020/039664
(87) International publication number: WO 2021/079924

(57) **Abstract**

A vehicle-use air conditioning device that supplies air to a side vent aperture portion regardless of a discharge mode, and allows a discharge of air from a defrost aperture portion when a discharge mode that maximizes a ratio of air blown to a passage communicating with a foot aperture portion is employed, is such that a change in an amount of air supplied from the defrost aperture portion is restricted using a simple structure that does not necessitate fine adjustment, even when an air passage on a downstream side of the side vent aperture portion is closed. A passage (a third passage 23) communicating with a side vent aperture portion 17b to a downstream side of heat exchangers 6, 7 is configured of a passage that, when a rotary type first door 25 that adjusts ratios of air blown to a first passage 21 communicating with a foot aperture portion 18 and a second passage 22 communicating with a defrost aperture portion 16 and a center vent aperture portion 17a is in a discharge mode position that maximizes the ratio of air blown to the first passage 21, connects a region to an upstream side of the first door 25 and the side vent aperture portion 17b, regardless of a discharge mode.

## Description

### Technical Field

The present invention relates to a vehicle-use air conditioning device that supplies air to a side vent aperture portion regardless of a discharge mode, the vehicle-use air conditioning device including a function of supplying air via a defrost aperture portion when a discharge mode that maximizes a ratio of air sent to a foot aperture portion is employed.

### Background Art

There is an existing vehicle-use air conditioning device wherein a heat exchanger is disposed inside an air conditioning case in which an air flow path is formed, a defrost aperture portion, a vent aperture portion, and a foot aperture portion are formed on a downstream side of the heat exchanger, the vent aperture portion is configured of a center vent aperture portion, which supplies air to be discharged toward an upper center of a vehicle, and a side vent aperture portion, which supplies air to be discharged toward a side window of the vehicle, a discharge of air from the defrost aperture portion is allowed when a foot mode is employed, and air on the downstream side of the heat exchanger is supplied to the side vent aperture portion regardless of a discharge mode.

For example, Patent Literature 1 is in the public domain as this kind of vehicle-use air conditioning device. This vehicle-use air conditioning device includes a first rotary type door that opens and closes a defroster and face communication portion (a central portion communication passage), which communicates with a defrost aperture portion and a center vent aperture portion, and a foot aperture portion, and a second rotary type door that is disposed in the defroster and face communication portion and opens and closes the defrost aperture portion and the center vent aperture portion. When the first rotary type door is operated so as to rotate to a foot mode position wherein the foot aperture portion is opened, a gap is formed in a radial direction of the door between one end portion of a door face in a circumferential direction and a sealing rib provided in an air conditioning case, a passage to the foot aperture portion is caused to communicate with the defrost aperture portion via the gap, and an amount of defrost bleed is secured when a foot mode is employed.

Also, air on a downstream side (an air mixing portion) of a heating heat exchanger is guided to the side vent aperture portion via left and right side communication passages separated from the central portion communication passage by partitioning walls.

In particular, the first rotary type door is formed to have an external form such that a back face portion on both left and right sides is recessed in order that air on the downstream side (the air mixing portion) of the heating heat exchanger can be guided to the left and right side communication passages leading to the side vent aperture portion when the first rotary type door is in a fully rotated position, and when employing the foot mode, wherein the center vent aperture portion is blocked off, air on an upstream side of the first rotary type door flows in such a way as to flow over the recessed portions (left and right door faces) in the back face portion of the first rotary type door, and is guided to left and right side communication passages provided on a downstream side of the first rotary type door. Further, when the foot mode is employed, the left and right side communication passages communicate with the central portion communication passage on the downstream side of the first rotary type door via a gap between the partitioning wall and the first rotary type door.

Meanwhile, in this example, a labyrinth structure is formed by a combination of a stepped portion provided in boundary portions between a central door face and left and right doors faces of the rotary type door and a lower end portion of the partitioning wall, in order to restrict a distribution (flowing in and out) of air between the central portion communication passage leading to the defrost aperture portion and the left and right communication passages leading to the side vent aperture portion on the downstream side of the first rotary type door.

According to this kind of configuration, a side vent discharge port that faces a vehicle interior and is connected via a duct to a side vent aperture portion is such that even when a shutter member included on an outlet side of the side vent discharge port is operated by an occupant of the vehicle and closed regardless of an operation of a vehicle-use air conditioning device, an inconvenience wherein air that has flowed into a communication passage leading to the side vent aperture portion flows into a central portion communication passage leading to a defrost aperture portion can be reduced, because of which an inconvenience in that an amount of defrost discharge air cannot be maintained at an appropriate value by opening and closing the shutter member when a foot mode is employed can be avoided.

### Citation List

### Patent Literature

Patent Literature 1: JP-A-2007-99188

### Summary of Invention

### Technical Problem

The heretofore described configuration, however, is such that a labyrinth structure needs to be provided in a periphery of a partitioning wall end portion in order to suppress a fluctuation in an amount of air supplied to a defrost aperture portion, and a structure is complex. Also, when providing a labyrinth structure in one portion of space in order to restrict a circulation of air in a vehicle-use air conditioning device in which blowing air circulates, a fine adjustment of dimensions of the relevant space is also needed as there is concern about a so-called whistling noise, and there is an inconvenience that leads to not only a more complex structure, but also more complicated adjustment.

The invention has been contrived in consideration of such a situation, and has a main object of providing a configuration that permits a discharge of air from a side vent aperture portion regardless of a discharge mode, and which is such that a change in an amount of air discharged from a defrost aperture portion can be restricted, regardless of whether an air passage disposed on a downstream side of the side vent aperture portion is open or closed, when employing a foot discharge mode that maximizes an amount of air discharged from a foot aperture portion, using a simple structure that does not necessitate fine adjustment.

### Solution to Problem

In order to achieve the heretofore described object, a vehicle-use air conditioning device according to the invention is characterized by including an air conditioning case in which an air flow path that discharges air into a vehicle cabin is formed, a heat exchanger that is disposed inside the air conditioning case and causes an exchange of heat with introduced air, and a defrost aperture portion, a vent aperture portion, and a foot aperture portion disposed on a downstream side of the heat exchanger in the air conditioning case, the vent aperture portion having a center vent aperture portion, which supplies air to be discharged toward an upper center of a vehicle, and a side vent aperture portion, which supplies air to be discharged toward a side window of the vehicle, the air flow path having a first passage that communicates with the foot aperture portion, a second passage that communicates with the defrost aperture portion and the center vent aperture portion, and a third passage that communicates with the side vent aperture portion, and by including a rotary type first door, which adjusts ratios of air blown to the first passage and the second passage, and a second door, which is disposed in the second passage and adjusts ratios of air blown to the defrost aperture portion and the center vent aperture portion, wherein a discharge of air from the defrost aperture portion is allowed when a discharge mode wherein the first door maximizes the ratio of air blown to the first passage is employed, and wherein the third passage is a passage that connects a region to an upstream side of the first door and the side vent aperture portion, regardless of a discharge mode.

Herein, the side vent aperture portion may be caused to connect with the third passage only, or may be caused to also connect with the second passage.

Consequently, as the third passage connects a region to the upstream side of the first door and the side vent aperture portion, air that has passed through the heat exchanger simply ceases to be sent into the third passage from the region to the upstream side of the first door, and continues to be sent to the first passage, even when an air passage on a downstream side of the side vent aperture portion is closed, regardless of an operation of the vehicle-use air conditioning device, when a foot discharge mode, which maximizes the ratio of air blown to the first passage, is employed. Because of this, a change in an amount of air discharged from the defrost aperture portion (an amount of air supplied from the defrost aperture portion) is restricted, and a stable amount of defrost bleed can be secured. Also, as the third passage is formed by connecting the region to the upstream side of the first door and the side vent aperture portion, a simple configuration that does not necessitate fine adjustment can be adopted.

Herein, it is good when the first door has a rotary shaft, side walls that form a pair provided extending practically vertically with respect to the rotary shaft, and a curved wall provided in such a way as to bridge the side walls forming the pair, and the curved wall is provided to a downstream side of the rotary shaft, and is formed in such a way that an intermediate portion in a direction of rotation is nearest to an axial center of the rotary shaft.

As the curved wall of the first door is provided to the downstream side of the rotary shaft, and is formed in such a way that the intermediate portion in the direction of rotation of the curved wall is nearest to the axial center of the rotary shaft, stagnation of air on an inner side of the door is eliminated, and air that has passed through the heat exchanger is smoothly supplied toward the first passage (the foot aperture portion), even when the air passage on the downstream side of the side vent aperture portion is closed. Further, a change in the amount of air discharged from the defrost aperture portion can be more reliably restricted.

This kind of door is such that as an area of a side wall of the door cannot be sufficiently secured, it is difficult to employ a configuration wherein a hole is provided in the side wall of the door and air is blown into the side vent aperture portion, but the invention is such that a configuration wherein the third passage is connected to the region on the upstream side of the first door is employed, because of which there is no need to process the first door in order to secure a blowing of air to the side vent aperture portion, and a blowing of air to the side vent aperture portion can be constantly secured, even when the aforementioned door is used. That is, a simple configuration can be employed.

Also, it is good when the third passage is formed in such a way as not to coincide with a rotation path of the first door.

According to this kind of configuration, the third passage is not blocked off by a rotation of the first door (a change in discharge mode), because of which air that has passed through the heat exchanger can be circulated to the side vent aperture portion regardless of the discharge mode.

As a more specific example of a configuration of the heretofore described vehicle-use air conditioning device, it is good, when the discharge mode wherein the first door maximizes the ratio of air blown to the first passage is employed, when air that has passed through the heat exchanger via a gap formed between an end portion separated from the axial center of the rotary shaft of the first door and the air conditioning case circulates in the second passage, and the third passage connects an air inflow portion, which is provided in a side wall of the air conditioning case facing a region on a side of the rotary shaft opposite to that of the gap, and the side vent aperture portion.

The air inflow portion of the third passage is provided separated on a side of the rotary shaft of the first door opposite to that of the gap, which forms a defrost bleed provided between the first door and the air conditioning case, meaning that even when the air passage on the downstream side of the side vent aperture portion is closed, a change in the amount of air supplied from the defrost aperture portion can be more reliably restricted.

Also, it is good when the third passage is provided on an outer side of the side wall of the air conditioning case. When adopting this kind of configuration, there is no longer a narrowing of an air flow path on an inner side of the side wall, and an inconvenience such as an increase in ventilation resistance or a decrease in an amount of defrost bleed can be avoided.

### Advantageous Effects of Invention

According to the invention, as heretofore described, a vehicle-use air conditioning device wherein a discharge of air from a defrost aperture portion is allowed when a foot discharge mode that maximizes an amount of air discharged from a foot aperture portion is employed is such that a third passage communicating with a side vent aperture portion is a passage that connects a region to an upstream side of a rotary type first door, which adjusts ratios of air blown to a first passage communicating with the foot aperture portion and a second passage communicating with the defrost aperture portion and a center vent aperture portion, and the side vent aperture portion, regardless of a discharge mode, meaning that when the foot mode is employed, air that has passed through the heat exchanger simply ceases to be sent into the third passage from the region on the upstream side of the first door, and continues to be sent to the first passage, even when an air passage on a downstream side of the side vent aperture portion is closed, whereby a change in an amount of air supplied from the defrost aperture portion can be restricted using a simple structure that does not necessitate fine adjustment.

### Brief Description of Drawings

[Fig. 1] Fig. 1 is a sectional view showing an example of an overall configuration of a vehicle-use air conditioning device according to the invention.
[Fig. 2] Fig. 2 is a perspective view of the vehicle-use air conditioning device shown in Fig. 1.
[Fig. 3] Fig. 3 is a front view seen from a vehicle cabin side of the vehicle-use air conditioning device shown in Fig. 1.
[Fig. 4] Fig. 4 is a perspective view showing an example of a configuration of a first door used in the vehicle-use air conditioning device according to the invention.
[Fig. 5] Fig. 5 is a drawing showing a state of a foot discharge mode of the vehicle-use air conditioning device shown in Fig. 1.
[Fig. 6] Fig. 6 is a sectional view showing another example of a configuration of the vehicle-use air conditioning device according to the invention, and is a drawing showing a state of a foot discharge mode.
[Fig. 7] Fig. 7 is a front view seen from the vehicle cabin side of a modification of the vehicle-use air conditioning device according to the invention. Description of Embodiments

Hereafter, an embodiment of the invention will be described, using the drawings.

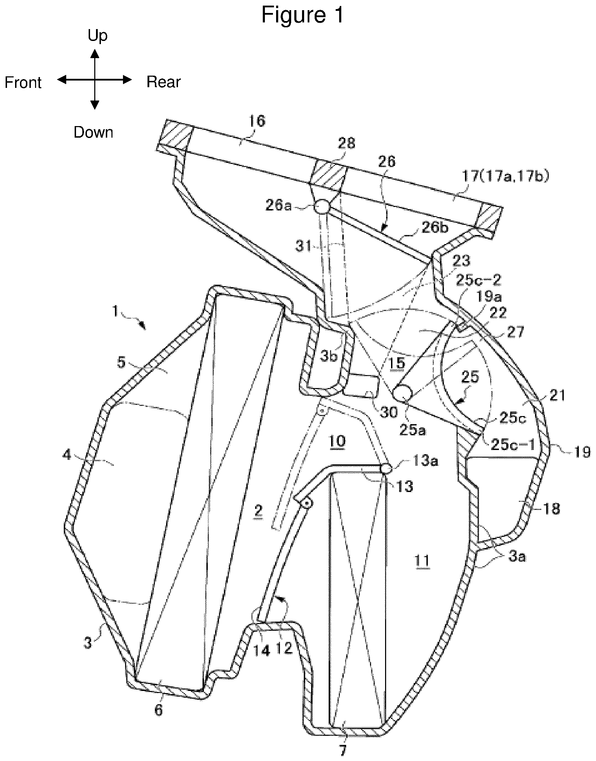

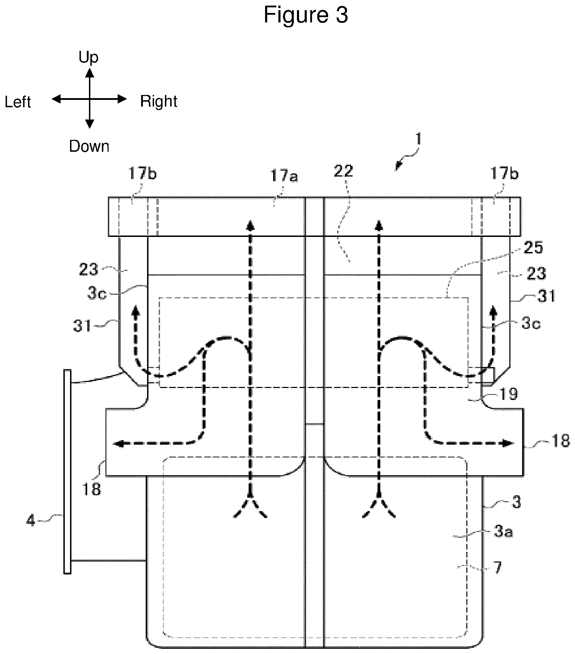

An air conditioning unit 1 of a centrally positioned type of vehicle-use air conditioning device mounted in a center console portion of a vehicle is shown in Figs. 1 to 3. The air conditioning unit 1 is disposed farther to a vehicle cabin side than a partitioning plate demarcating an engine room and the vehicle cabin, includes an air conditioning case 3 in which an air flow path 2 is formed, and is of a configuration such that external air (air outside the vehicle cabin) and/or internal air (air inside the vehicle cabin) is introduced from an unshown air blower unit into an air introduction space 5 provided on a most upstream side of the air conditioning case 3 via an air inlet 4 provided in a side face.

In Fig. 1, the air conditioning unit 1 is mounted in the vehicle in such a way that a left side is on a front side (the engine room side) in a direction of travel of the vehicle, and a right side is on a rear side (the vehicle cabin side) in the direction of travel of the vehicle. The air conditioning case 3 is formed of a synthetic resin material, is configured of a multiple of case members for reasons relating to assembly of air conditioning instruments inside the case, and circumstances relating to mold-release when molding, and is configured by the multiple of case members being fastened using predetermined fastening means.

An evaporator 6 forming a cooling heat exchanger is disposed on a downstream side of the air introduction space 5 inside the air conditioning case 3, and a heater core 7 forming a heating heat exchanger is disposed on a downstream side of the evaporator 6.

The evaporator 6 configures one portion of a refrigeration cycle, is disposed erect in a state somewhat inclined in the air flow path 2 in order that all air introduced from the air inlet 4 passes through, and cools the air passing through as necessary.

The heater core 7 heats air, with engine cooling water (warm water) as a heat source, and is disposed erect in a state practically parallel to the evaporator 6, and with an upper end separated from the air conditioning case 3. Also, the heater core 7 is disposed separated by a predetermined interval from a guide wall 3a of the air conditioning case 3 provided behind the heater core 7. Instead of a heater core in which warm water is circulated, the heater core 7 may be an electric heat generating type that generates heat by electric power being input, or a refrigerant heat dissipating type in which a high temperature, high pressure refrigerant is circulated. Alternatively, a multiple of these may be disposed.

Consequently, a cold air passage 10 that leads cold air that has passed through the evaporator 6 only (air that has bypassed the heater core 7 rather than passing through the heater core 7) obliquely upward toward the vehicle cabin side is formed above the heater core 7 on the downstream side of the evaporator 6, and a warm air passage 11 that leads air that has passed through the heater core 7 upward is formed between the heater core 7 and the guide wall 3a on the downstream side of the evaporator 6.

An air blend door 12 is disposed between the evaporator 6 and the heater core 7. Although the air blend door 12 may be configured of a cantilevered panel door, a sliding door is employed in order to achieve a reduction in size of the air conditioning unit. In this example in particular, the air blend door 12 is configured of a cantilevered panel 13, which is provided above the heater core 7 and rotates centered on a rotary shaft 13a, and a sliding panel 14, of which one end portion is coupled to a leading end portion of the cantilevered panel 13 in such a way as to be able to pivot, and another end portion is engaged in an unshown guide groove formed in a vertical direction between the evaporator 6 and the heater core 7 of the air conditioning case 3, and slides along the guide groove.

Consequently, when the sliding panel 14 is caused to slide as far down as possible, as shown by a solid line in the drawing, a front face of the heater core 7 is blocked off by the air blend door 12, and air that has passed through the evaporator 6 flows through the cold air passage 10 only, when the sliding panel 14 is caused to slide as far up as possible, as shown by a dotted chain line, the cold air passage 10 is closed by the air blend door 12, and air that has passed through the evaporator 6 flows via the heater core 7 through the warm air passage 11 only, and when the sliding panel 14 is in an intermediate position, air that has passed through the evaporator 6 flows divided between the cold air passage 10 and the warm air passage 11. That is, ratios of an amount of cold air flowing through the cold air passage 10 and an amount of warm air that is heated by passing through the heater core 7 are regulated by the position of the air blend door 12. Consequently, temperature adjusting means that adjusts a temperature of air introduced into the air conditioning case 3 is formed of the evaporator 6, the heater core 7, and the air blend door 12.

Further, a blending space 15 wherein warm air that rises via the warm air passage 11 collides and mixes with cold air that has passed through the cold air passage 10 is formed above the heater core 7, that is, on a downstream side.

A defrost aperture portion 16, which supplies air to be discharged toward a windshield, and a vent aperture portion 17, which supplies air to be discharged upward in the vehicle cabin, open in an upper end portion of the air conditioning case 3, and a foot aperture portion 18, which supplies air to be discharged downward in the vehicle cabin, opens in a rear portion of the air conditioning case 3.

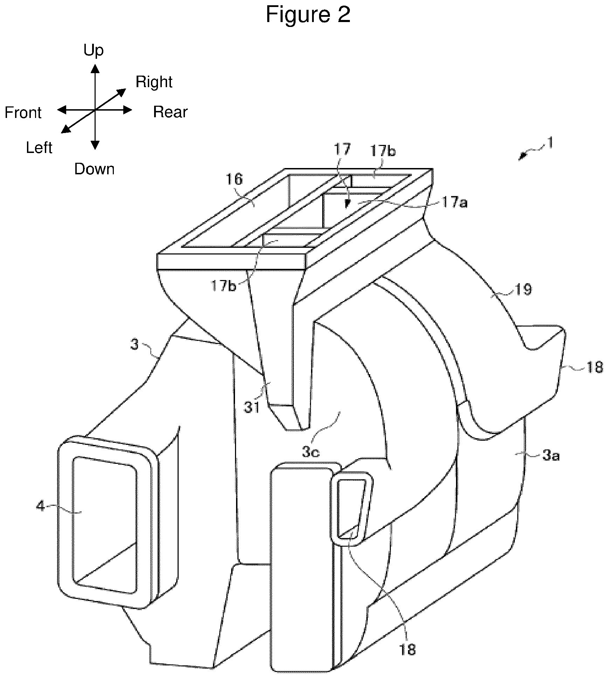

The defrost aperture portion 16 opens on a vehicle front side of the upper end portion of the air conditioning case 3, and the vent aperture portion 17 opens on a vehicle rear side of the defrost aperture portion 16. Also, the vent aperture portion 17 is such that a center vent aperture portion 17a and a side vent aperture portion 17b are disposed aligned in a vehicle width direction, and the side vent aperture portion 17b is disposed on both left and right sides of the center vent aperture portion 17a, as shown in Fig. 2.

Herein, the center vent aperture portion 17a is an aperture portion that supplies air to be discharged toward an upper center of the vehicle, and the side vent aperture portion 17b is an aperture portion that supplies air to be discharged toward a side window of the vehicle.

The foot aperture portion 18 opens in an extremity portion of a foot passage bulging wall 19 provided in such a way as to protrude farther to the vehicle cabin side than the guide wall 3a of the air conditioning case 3, and the foot passage bulging wall 19 is such that a lower end portion is forked as shown in Fig. 2, because of which the foot aperture portion 18 opens divided between a driver's seat side and a passenger seat side.

Further, the foot aperture portion 18 and the blending space 15 communicate via a lower discharge passage (first passage) 21 provided between the guide wall 3a and the foot passage bulging wall 19, the defrost aperture portion 16 and the center vent aperture portion 17a communicate with the blending space 15 via an upper discharge passage (second passage) 22 of the air conditioning case 3 provided extended upward from the blending space 15, and the side vent aperture portion 17b and the blending space 15 communicate via a third passage 23 to be described hereafter.

A rotary type first door 25, which adjusts distribution ratios (blowing ratios) ratios of air blown of air heading from the blending space 15 toward the lower discharge passage (first passage) 21 and air heading toward the upper discharge passage (second passage) 22, is disposed in the blending space 15. Also, a second door 26, which adjusts ratios of air blown to the defrost aperture portion 16 and the center vent aperture portion 17a, is disposed in the upper discharge passage (second passage) 22.

Consequently, the first to third passages 21, 22, and 23 are formed in extremity portions of the air flow path 2, and air whose temperature has been adjusted by the temperature adjusting means is guided via the first passage 21 to the defrost aperture portion 16 and the center vent aperture portion 17a, and guided via the second passage 22 to the foot aperture portion 18, in accordance with the positions of the first and second doors 25 and 26. Also, air whose temperature has been adjusted by the temperature adjusting means is guided via the third passage 23 to the side vent aperture portion 17a, regardless of the positions of the first and second doors 25 and 26.

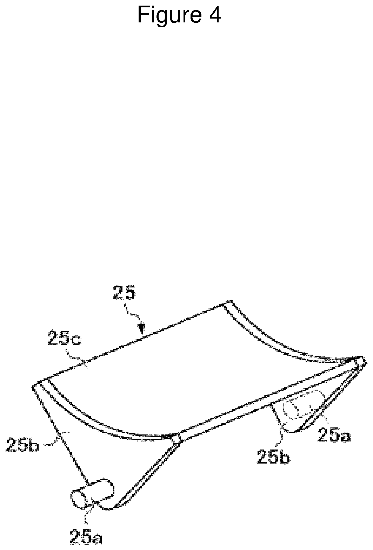

As shown in Fig. 4, the first door 25 is configured to have a rotary shaft 25a, side walls 25b that form a pair provided extending practically vertically with respect to the rotary shaft 25a, and a curved wall 25c provided in such a way as to bridge the side walls forming a pair.

The rotary shaft 25a is provided protruding to an outer side from the pair of side walls 25b, is supported in such a way as to rotate freely by opposing left and right side walls 3c of the air conditioning case 3, and is coupled to a motor actuator or the like via an unshown linking mechanism by one end portion being caused to protrude to an exterior of the air conditioning case 3. The curved wall 25c is provided to the downstream side of the rotary shaft 25a, and is formed in such a way that an intermediate portion in a direction of rotation is nearest to an axial center of the rotary shaft 25a. Also, each side wall 25b is formed in a form such that an outer peripheral edge thereof is aligned with the curved form of the curved wall 25c, and an intermediate portion is in closest proximity to the axial center of the rotary shaft 25a.

Further, the first door 25 is caused to rotate with the rotary shaft 25a as a center, and in a state wherein the foot aperture portion 18 (the lower discharge passage 21) is blocked off, one end portion (one end portion separated from the axial center of the rotary shaft 25a) 25c-1 in a pivoting direction of the curved wall 25c is in contact with an upper end portion of the guide wall 3a, and another end portion (side edge portion) 25c-2 in the pivoting direction is in a state of being in contact with a seat portion 19a formed on an inner face of the foot passage bulging wall 19 (a state of a position A indicated by a solid line in Fig. 1) . Also, in a state wherein the lower discharge passage (the first passage 21) is fully opened (a discharge mode that maximizes the ratio of air blown to the first passage 21 from the blending space 15), the other end portion 25c-2 in the direction of rotation of the curved wall 25c is in contact with a seat portion 3b of the air conditioning case 3 provided above the air blend door 12, and the one end portion (the one end portion separated from the axial center of the rotary shaft 25a) 25c-1 in the direction of rotation is disposed in such a way that a predetermined gap 27 with the air conditioning case 3 (the foot passage bulging wall 19) is formed (in such a way that a state of a position B indicated by a dotted chain line in Fig. 1 is reached).

The second door 26 is a cantilever door including a rotary shaft 26a, which is supported in a vicinity of an inner side of a boundary rib 28 between the defrost aperture portion 16 and the center vent aperture portion 17a provided in the upper end portion of the air conditioning case 3, and a plate portion 26b provided extending from the rotary shaft 26a toward an interior of the upper discharge passage (second passage) 22, and can pivot from a position blocking off the center vent aperture portion 17a (a position indicated by a solid line in Fig. 1) to a position blocking off the defrost aperture portion 16 (a position indicated by a dotted chain line in Fig. 1). When a defrost mode or a foot mode is employed, the second door 26 is set in a position such that the defrost aperture portion 16 is opened and the center vent aperture portion 17a is closed.

In this kind of configuration, the third passage 23 connecting the blending space 15 and the side vent aperture portion 17b is configured as a passage that connects a region to the upstream side of the first door 25 and the side vent aperture portion 17b, as shown in Figs. 1 to 3, regardless of a discharge mode. More specifically, the third passage 23 includes at least an air inflow portion 30, provided in such a way as not to coincide with a rotation path of the first door 25, and a side vent duct wall 31.

The air inflow portion 30 is an aperture in the side wall 3c of the air conditioning case 3 provided in such a way as to communicate with the blending space 15 to the upstream side of the first door 25, and is preferably provided in a position facing a region on a side of the rotary shaft 25a opposite to that of the gap 27. A change in an amount of air discharged from the defrost aperture portion caused by an opened or closed state of an air passage on a downstream side of the side vent aperture 17b can be more reliably restricted, as will be described hereafter.

The side vent duct wall 31 covers the air inflow portion 30 and extends upward from the air inflow portion 30 as far as the side vent aperture portion 17b, as shown in Fig. 2, and is provided integrally or separately on left and right direction outer sides of the side wall 3c of the air conditioning case 3.

In this example, the air inflow portion 30 is formed as an aperture formed to be approximately rectangular, but the air inflow portion 30 may be of any form, and a guide member that guides an introduction of air to the third passage 23 may be provided within a range that does not interfere with the first door 25.

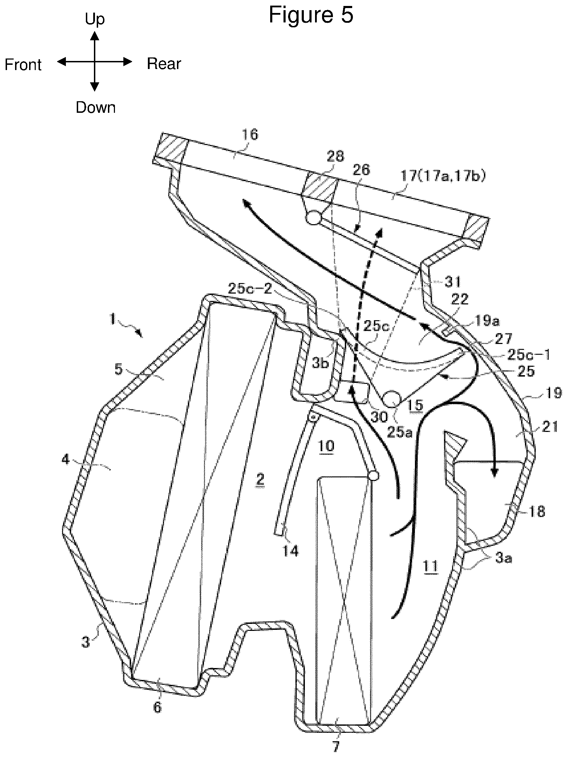

The heretofore described configuration is such that when a discharge mode that maximizes the ratio of air blown to the first passage 21 is employed (when the foot discharge mode is employed), the air blend door 12 blocks off the cold air passage 10, as shown in Fig. 5, and all air that has passed through the evaporator 6 is caused to pass through the heater core 7, and guided to the warm air passage 11. Further, the first door 25 is set in a state that minimizes an aperture of the second passage 22 (minimizes the ratio of air blown to the second passage 22), that is, a position wherein the other end portion 25c-2 in the direction of rotation of the curved wall 25c of the first door 25 is in contact with the seat portion 3b of the air conditioning case 3 provided above the air blend door 12, and the predetermined gap 27 is formed between the one end portion (the one end portion separated from the axial center of the rotary shaft 25a) 25c-1 in the direction of rotation and the air conditioning case 3 (the foot passage bulging wall 19). Also, the second door 26 is set in a position blocking off the center vent aperture portion 17a.

In this state, a large amount of warm air that has risen through the warm air passage 11 and reached the blending space 15 flows into the first passage 21, and is discharged from the foot aperture portion 18 into the vehicle cabin. Also, one portion of warm air that has flowed into the first passage 21 flows into the second passage 22 via the gap 27 formed between the one end portion (the one end portion separated from the axial center of the rotary shaft 25a) 25c-1 in the direction of rotation of the curved wall 25c of the first door 25 and the air conditioning case 3 (the foot passage bulging wall 19), heads toward the defrost aperture portion 16 guided by the second door 26, which is positioned in such a way as to close the center vent aperture portion 17, and is discharged from the defrost aperture portion 16 into the vehicle cabin.

At this time, as the first door 25 is formed in such a way that the curved wall 25c is provided to the downstream side of the rotary shaft 25a, and the intermediate portion in the direction of rotation is nearest to the axial center of the rotary shaft 25a, warm air sent from the warm air passage 11 to the blending space 15 is guided smoothly to the first passage 21 by being guided along the curved wall 25c.

Also, the air inflow portion 30 is provided in the side wall 3c of the air conditioning case 3 facing a region on the side of the rotary shaft 25a of the first door 25 opposite to that of the gap 27. One portion of warm air that has risen through the warm air passage 11 and reached the blending space 15 is guided to a side opposite to that of the first passage 21 by being guided by the curved wall 25c, flows from the air inflow portion 30 into the third passage 23, is discharged from the side vent aperture portion 17b to an unshown duct, and is discharged into the vehicle cabin from a side vent discharge port that includes a shutter member and is provided in a position facing the vehicle cabin interior.

In this state, it may happen that the shutter member is operated by an occupant of the vehicle, and the air passage disposed on the downstream side of the side vent aperture portion 17b is closed, regardless of an operating state of each kind of door 12, 25, and 26 of the air conditioning unit 1. When a discharge of air from the side vent discharge port is stopped by the shutter member being operated, the circulation of the one portion of warm air flowing from the blending space 15 into the third passage 23 via the air inflow portion 30 is stopped. However, even when the air passage disposed on the downstream side of the side vent aperture portion 17b is closed in this way, the one portion of warm air heading to the third passage 23 is sent toward the first passage 21, and moreover, a greater portion of warm air that has flowed into the first passage 21 flows toward the foot aperture portion 18. Therefore, an effect of a change in the flow of air into the second passage 22 via the gap 27 is sufficiently reduced. Also, in practical terms, the discharge of air from the side vent discharge port being restarted by the shutter member being operated means simply that a flow path is changed in such a way that one portion of a large amount of warm air flowing into the first passage circulates through the third passage 23. Therefore, the effect of a change in the flow of air into the second passage 22 via the gap 27 is limited. That is, a stable amount of defrost bleed can be secured using a simple structure that does not necessitate fine adjustment, wherein the third passage 23 connecting a region to the upstream side of the first door 25 and the side vent aperture portion 17b is provided.

Also, as the heretofore described configuration is such that the third passage 23 (the air inflow portion 30) is not blocked off by a rotation of the first door 25 (a change of the discharge mode), the amount of air blown to the side vent aperture portion 17b can be constantly secured, regardless of the discharge mode.

Furthermore, the heretofore described configuration is such that the air inflow portion 30 of the third passage 23 is provided separated in a region on a side of the rotary shaft 25a of the first door 25 opposite to that of the gap 27, which forms a defrost bleed provided between the first door 25 and the air conditioning case 3 (the foot passage bulging wall 19), meaning that even when the downstream side of the side vent aperture portion 17b is suddenly closed off by an operation of the shutter member, an effect on the amount of air flowing via the gap 27 can be more reliably averted. That is, a change in the amount of air supplied from the defrost aperture portion 16 can be more reliably restricted.

Further still, the heretofore described configuration is such that the third passage 23 is provided on the outer side of the side wall 3c of the air conditioning case 3, because of which there is no longer a narrowing of an air flow path on an inner side of a side wall, and an inconvenience such as an increase in ventilation resistance or a decrease in an amount of defrost bleed can be avoided.

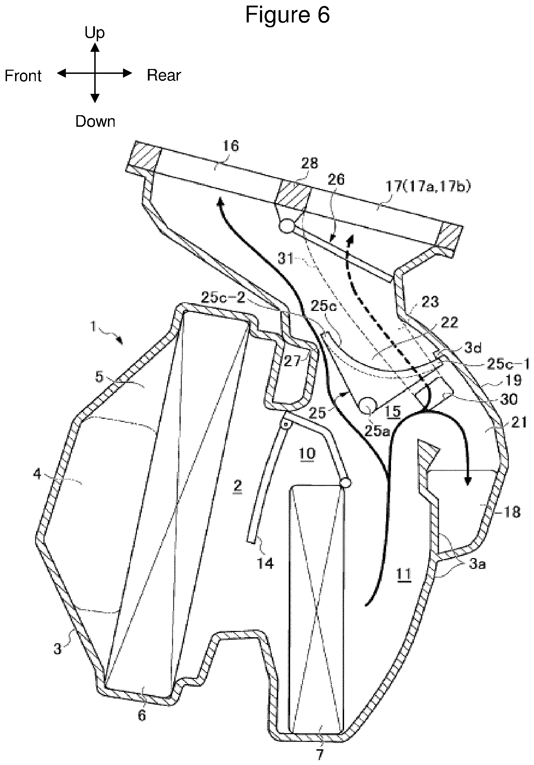

The heretofore described configuration is such that when the foot mode is employed, the gap 27 is formed between the one end portion (the end portion on the side nearer to the foot aperture portion 18) 25c-1 separated from the axial center of the rotary shaft 25a of the first door 25 and the rear portion side wall (the foot passage bulging wall 19) of the air conditioning case 3, which is farther to the rear side than the door, and the air inflow portion 30 of the third passage 23 is provided in the side wall 3c of the air conditioning case 3 facing a region on the side of the rotary shaft 25a opposite to that of the gap 27, but as shown in Fig. 6, a configuration may be such that when the foot discharge mode is employed, the one end portion (the end portion on the side nearer to the foot aperture portion 18) 25c-1 separated from the axial center of the rotary shaft 25a of the first door 25 is brought into contact with a seat portion 3d provided on the air conditioning case 3 (the foot passage bulging wall 19), the gap 27 is formed between the other end portion (the end portion on the side farther from the foot aperture portion 18) 25c-2 separated from the axial center of the rotary shaft 25a of the first door 25 and a wall portion of the air conditioning case 3 forming a side farther to the front than the first door 25, and the air inflow portion 30 communicating with the third passage 23 is provided in a side wall of the air conditioning case 3 facing a region on a side of the rotary shaft 25a opposite to that of the gap 27, that is, a region of the blending space 15 above the first passage 21. Together with this, the side vent duct wall 31 provided on an outer side of the air conditioning case is formed in a position farther to the rear side than in the working example illustrated in Fig. 1.

This kind of configuration is also such that even when the shutter member of the side vent duct connected to a region on the downstream side of the side vent aperture portion 17b is suddenly closed when the foot discharge mode is employed, air that reaches the blending space 15 is guided via the first passage 21 to the foot aperture portion 18 in the same way as the flow of a greater portion of other air, without flowing via the air inflow portion 30 to the third passage 23, because of which the amount of defrost bleed can be maintained at an appropriate value without affecting the amount of defrost bleed when the foot discharge mode is employed.

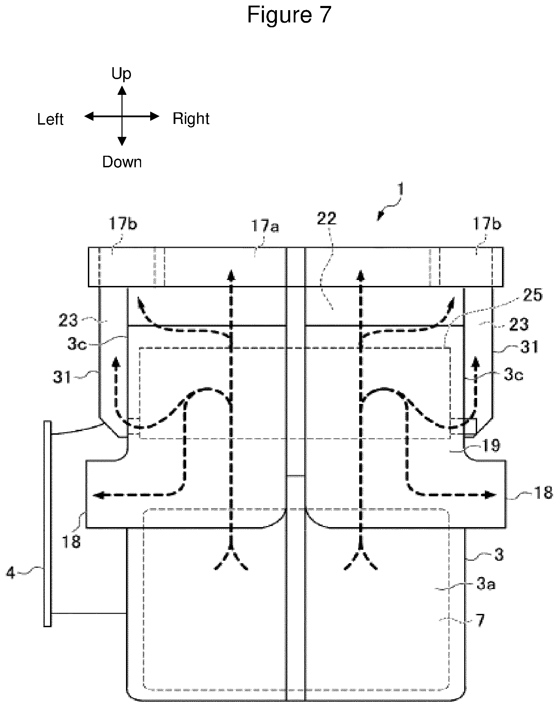

Also, the heretofore described configuration is such that an example wherein the side vent aperture portion 17b is connected only to the third passage 23 has been shown, but the side vent aperture portion 17b may also be connected to the second passage 22, as shown in Fig. 7. According to this kind of configuration, one portion of air that has passed through the gap 27 and flowed into the second passage 22 can also be supplied to the side vent aperture portion 17b, and the amount of bleed (the amount of air supplied) of the center vent aperture portion 17a and the side vent aperture portion 17b is easily regulated to an appropriate ratio.

Herein, an area of a portion of the second passage 22 connected to the side vent aperture portion 17b is set to be sufficiently smaller than an area of a portion connected to the center vent aperture portion 17a. This means that whether a circulation of air in the side vent aperture portion 17b is prohibited by the shutter member of the side vent duct connected to a region on the downstream side of the side vent aperture portion 17b being closed, or whether a circulation of air in the side vent aperture portion 17b is permitted by the shutter member being opened, there is no great change in the amount of air supplied from the center vent aperture portion 17a. Reference Signs List

1 Air conditioning unit
2 Air flow path
3 Air conditioning case
3c Side wall
6, 7 Heat exchanger
16 Defrost aperture portion
17 Vent aperture portion
17a Center vent aperture portion
17b Side vent aperture portion
18 Foot aperture portion
21 First passage
22 Second passage
23 Third passage
25 First door
26 Second door
25a Rotary shaft
25b Side wall
25c Curved wall
25c-1 One end portion (one end portion separated from axial center of rotary shaft of first door) in pivoting direction of curved wall
25c-2 Other end portion (other end portion separated from axial center of rotary shaft of first door) in pivoting direction of curved wall
30 Air inflow portion

## Claims

1. A vehicle-use air conditioning device, comprising:
an air conditioning case (3) in which an air flow path (2) that discharges air into a vehicle cabin is formed;
a heat exchanger (6, 7) that is disposed inside the air conditioning case (3) and causes an exchange of heat with introduced air; and
a defrost aperture portion (16), a vent aperture portion (17), and a foot aperture portion (18) disposed on a downstream side of the heat exchanger (6, 7) in the air conditioning case (3),
the vent aperture portion (17) having a center vent aperture portion (17a), which supplies air to be discharged toward an upper center of a vehicle, and a side vent aperture portion (17b), which supplies air to be discharged toward a side window of the vehicle, and
the air flow path (2) having a first passage (21) that communicates with the foot aperture portion (18), a second passage (22) that communicates with the defrost aperture portion (16) and the center vent aperture portion (17a), and a third passage (23) that communicates with the side vent aperture portion (17b), and comprising:
a rotary type first door (25), which adjusts ratios of air blown to the first passage (21) and the second passage (22); and
a second door (26), which is disposed in the second passage (22) and adjusts ratios of air blown to the defrost aperture portion (16) and the center vent aperture portion (17a), wherein
a discharge of air from the defrost aperture portion (16) is allowed when a discharge mode wherein the first door (25) maximizes the ratio of air blown to the first passage (21) is employed, and wherein
the third passage (23) is a passage that connects a region to an upstream side of the first door (25) and the side vent aperture portion (17b), regardless of a discharge mode.

2. The vehicle-use air conditioning device according to claim 1, wherein the first door (25) has a rotary shaft (25a), side walls (25b, 25b) that form a pair provided extending practically vertically with respect to the rotary shaft (25a), and a curved wall (25c) provided in such a way as to bridge the side walls forming the pair, and
the curved wall (25c) is provided to the downstream side of the rotary shaft (25a), and is formed in such a way that an intermediate portion in a direction of rotation is nearest to an axial center of the rotary shaft (25a).

3. The vehicle-use air conditioning device according to claim 1 or 2, wherein the third passage (23) is formed in such a way as not to coincide with a rotation path of the first door (25) .

4. The vehicle-use air conditioning device according to any one of claims 1 to 3, wherein, when the discharge mode wherein the first door (25) maximizes the ratio of air blown to the first passage (21) is employed, air that has passed through the heat exchanger (7) via a gap (27) formed between an end portion (25c-1) separated from the axial center of the rotary shaft (25a) of the first door (21) and the air conditioning case (3) circulates in the second passage (22), and
the third passage (23) connects an air inflow portion (30), which is provided in a side wall of the air conditioning case (2) facing a region on a side of the rotary shaft (25a) opposite to that of the gap (27), and the side vent aperture portion (17b).

5. The vehicle-use air conditioning device according to any one of claims 1 to 4, wherein the third passage (23) is provided on an outer side of a side wall (3c) of the air conditioning case (3).
